(19) Europäisches Patentamt
European Patent Office
Office européen des brevets

(11) **EP 3 933 224 A1**

(12) **EUROPÄISCHE PATENTANMELDUNG**

(43) Veröffentlichungstag:
**05.01.2022 Patentblatt 2022/01**

(51) Int Cl.:
*F16D 23/02* *(2006.01)*    *F16D 69/00* *(2006.01)*

(21) Anmeldenummer: **21182548.4**

(22) Anmeldetag: **29.06.2021**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **02.07.2020   DE 102020003985**

(71) Anmelder: **Diehl Metall Stiftung & Co. KG**
**90552 Röthenbach (DE)**

(72) Erfinder:
• **Burkhardt, Christoph**
**91054 Erlangen (DE)**
• **Heider, Jochen**
**91126 Schwabach (DE)**
• **Sollner, Norbert**
**91247 Vorra (DE)**

(74) Vertreter: **Diehl Patentabteilung**
**c/o Diehl Stiftung & Co. KG**
**Stephanstraße 49**
**90478 Nürnberg (DE)**

(54) **VERFAHREN ZUR HERSTELLUNG EINES SYNCHRONRINGS ODER EINER KONISCHEN REIBKUPPLUNG MIT EINEM REIBBELAG UND SYNCHRONRING ODER KONISCHE REIBKUPPLUNG**

(57)    Verfahren zur Herstellung eines Synchronrings oder einer konischen Reibkupplung (4) mit einem Reibbelag (2) mit folgenden Schritten: Bereitstellen eines Synchronrings (4) oder eines Kupplungsbauteils mit einer Konusfläche (5), Bereitstellen eines flächenhaften Reibmaterials (1), Schneiden des Reibmaterials (1), so dass ein streifenförmiger Reibbelag (2) mit zwei einander gegenüberliegenden langen Seiten (S1, S2) gebildet wird, Fügen des Reibbelags (2) auf die Konusfläche (5), wobei das Reibmaterial (1) so geschnitten wird, dass die beiden einander gegenüberliegenden langen Seiten (S1, S2) des Reibbelags (2) eine identische Geometrie aufweisen.

**Fig. 2**

**Beschreibung**

Die Erfindung betrifft ein Verfahren zur Herstellung eines Synchronrings oder einer konischen Reibkupplung mit einem Reibbelag nach dem Oberbegriff des Patentanspruchs 1.

Ein solches Verfahren ist beispielsweise aus der EP 0 305 581 B1 bekannt.

Beim bekannten Verfahren wird ein streifenförmiger Reibbelag mit zwei einander gegenüberliegenden langen Seiten aus einem flächenhaften Reibmaterial, z. B. einer papierartigen Folie, einer Karbonmatte oder dgl. geschnitten oder gestanzt. Die Geometrie des streifenförmigen Reibbelags ergibt sich nach dem Stand der Technik aus der Form der Konusfläche des Synchronrings. Die konische Form der Reibfläche entspricht geometrisch der Mantelfläche eines Kegelstumpfs. Wickelt man die Mantelfläche des Kegelstumpfs auf eine 2-dimensionale ebene Fläche ab, so ergibt sich die sogenannte "Abwicklung". Reibbeläge werden üblicherweise in die Form der Abwicklung geschnitten und nachfolgend auf die Reibfläche gefügt, beispielsweise geklebt.

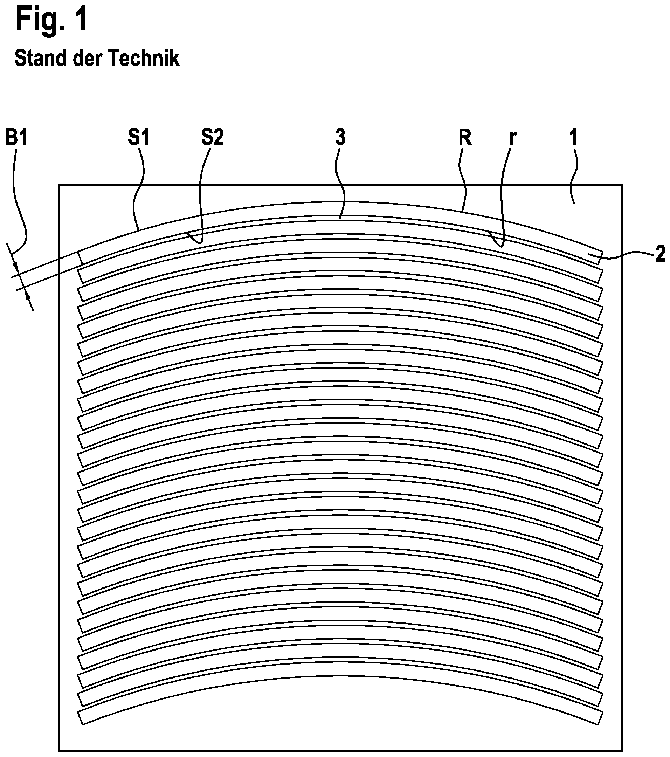

Fig. 1 zeigt ein flächenhaftes Reibmaterial mit einer Vielzahl von aufeinander folgenden Abwicklungen nach dem Stand der Technik. Bei herkömmlichen Abwicklungen sind die Radien der einander gegenüberliegenden langen Seiten unterschiedlich. Infolgedessen ergibt sich zwischen den langen Seiten benachbarter Abwicklungen ein unerwünschter Verschnitt.

Aufgabe der Erfindung ist es, die Nachteile nach dem Stand der Technik zu beseitigen. Es soll insbesondere ein Verfahren angegeben werden, mit dem ein Synchronring mit einem Reibbelag mit vermindertem Aufwand herstellbar ist. Nach einem weiteren Ziel der Erfindung soll ein kostengünstig herstellbarer Synchronring mit einem Reibbelag angegeben werden.

Diese Aufgabe wird durch die Merkmale der Patentansprüche 1 und 11 gelöst. Zweckmäßige Ausgestaltungen ergeben sich aus den Merkmalen der abhängigen Patentansprüche.

Nach Maßgabe der Erfindung wird vorgeschlagen, dass das Reibmaterial so geschnitten wird, dass die beiden einander gegenüberliegenden langen Seiten des Reibbelags eine identische Geometrie aufweisen. Damit ist es möglich, den Verschnitt beim Schneiden des Reibbelags aus einem flächenhaften Reibmaterial erheblich zu vermindern. Das vorgeschlagene Verfahren ermöglicht eine vereinfachte und damit kostengünstigere Herstellung eines Synchronrings mit einem Reibbelag.

Im Sinne der vorliegenden Erfindung kann es sich bei der "Konusfläche" um eine konische Innen- oder Außenfläche handeln. Der Ausdruck "Schneiden des Reibmaterials" ist im Sinne der vorliegenden Erfindung allgemein zu verstehen, d. h. das Reibmaterial kann mechanisch geschnitten oder gestanzt werden oder z. B. mittels Laser oder Wasserstrahl geschnitten werden. Unter dem Begriff "identische Geometrie" wird die Geometrie der langen Seiten des Reibbelags in Draufsicht verstanden, wobei etwaige geringfügigen Längenunterschiede an den einander gegenüberliegenden kurzen Seiten des Reibbelags nicht zu berücksichtigen sind.

Indem erfindungsgemäß das Reibmaterial so geschnitten wird, dass die beiden einander gegenüberliegenden langen Seiten des Reibbelags eine identische Geometrie aufweisen, ergibt sich für den Reibbelag eine geometrische Form, welche nicht exakt der Abwicklung der Konusfläche entspricht.

Nach einer vorteilhaften Ausgestaltung werden mehrere Reibbeläge aus dem Reibmaterial geschnitten, derart, dass die langen Seiten benachbarter Reibbeläge durch eine einzige Schnittlinie gebildet werden. Das ermöglicht eine besonders effiziente Herstellung von Reibbelägen. Der Verschnitt wird minimiert.

Die langen Seiten des Reibbelags können einen identischen Radius aufweisen. Nach einer besonders vorteilhaften Ausgestaltung können die langen Seiten des Reibbelags auch wellen- oder trapezförmig ausgebildet sein. Ein solcher wellen- oder trapezförmig ausgebildeter streifenförmiger Reibbelag kann gekrümmt oder gerade ausgebildet sein. Bei einer gekrümmten Ausbildung liegen Maxima und/oder Minima der wellen- oder trapezförmig ausgebildeten langen Seiten auf identischen Radien. - Die Begriffe "Maxima" und "Minima" sind in Rahmen der vorliegenden Erfindung nicht exakt mathematisch zu verstehen. Bei der wellenförmigen Ausbildung des Reibbelags berühren die Maxima und die Minima die Radien jeweils in einem Punkt oder in mehreren Punkten. Bei der trapezförmigen Ausbildung des Reibbelags können die Maxima und Minima die Radien auch entlang einer oder mehrerer Strecken berühren.

Nach einer weiteren Ausgestaltung können die Maxima und/oder Minima der wellen- oder trapezförmigen langen Seiten auch auf einer Geraden liegen. Diese Ausgestaltung des Reibbelags eignet sich insbesondere zur Anbringung auf einer Konusfläche mit kleiner Konizität.

Die Konusfläche weist eine erste Breite B1 und der Reibbelag eine zweite Breite B2 auf. Insbesondere bei einer wellen- oder trapezförmigen Ausbildung des Reibbelags gilt für das Verhältnis zwischen erster Breite B1 und zweiter Breite B2:

$$B1 = K * B2,$$

wobei $3 \geq K \geq 1{,}3$ ist.

D. h. die zweite Breite B2 des Reibbelags ist deutlich kleiner gewählt als die erste Breite B1 der Konusfläche. Dabei ist die zweite Breite B2 entlang des streifenförmigen Reibbelags im Wesentlichen gleichbleibend. Für die zweite Breite B2 bzw. für den Mittelwert B2m der zweiten Breite B2 gilt vorzugsweise:

$$0,8 * B2m \geq B2 \geq 1,2 * B2m,$$

vorzugsweise

$$0,9 * B2m \geq B2 \geq 1,1 * B2m$$

Ein streifenförmiger Reibbelag, dessen zweite Breite B2 deutlich kleiner als die erste Breite B1 der Konusfläche ist, lässt sich beim Anbringen auf die Konusfläche leichter verformen. Abgesehen davon wird zur Herstellung eines Reibbelags mit wellen- oder trapezförmiger Ausgestaltung weniger Reibmaterial benötigt. Damit kann die Effizienz des Verfahrens weiter gesteigert werden.

Vorteilhafterweise wird der Reibbelag in Umfangsrichtung der Konusfläche so angebracht, dass Minima des Reibbelags sich in der Nähe einer unteren Kante der Konusfläche und Maxima des Reibbelags sich in der Nähe einer oberen Kante der Konusfläche befinden. D. h. der Reibbelag weist zwischen der oberen und der unteren Kante der Konusfläche einen mäandrierenden Verlauf auf.

Der Reibbelag kann vor oder beim Fügen so verformt werden, dass ein die langen Seiten begrenzender Radius zumindest abschnittsweise geändert wird oder eine die langen Seiten begrenzende Gerade zumindest abschnittsweise in einen Radius geändert wird. Damit ist es möglich, die Geometrie des streifenförmigen Reibbelags an die Geometrie der Konusfläche anzupassen. Die dazu notwendige Verformung gelingt insbesondere wegen der geringeren Ausbildung der zweiten Breite B2 gegenüber der ersten Breite B1.

Nach weiterer Maßgabe der Erfindung wird ein Synchronring mit einer Konusfläche und einem auf die Konusfläche gefügten Reibbelag vorgeschlagen, wobei die Konusfläche eine erste Breite B1 und der Reibbelag eine zweite Breite B2 aufweisen, und wobei für das Verhältnis zwischen erster B1 und zweiter Breite B2 gilt:

$$B1 = K * B2,$$

wobei $3 \geq K \geq 1,3$ ist.

Wegen der weiteren vorteilhaften Ausgestaltungen des Synchronrings wird auf die Erläuterungen zu den vorangegangenen Merkmalen des Verfahrens verwiesen, welche sinngemäß auch Merkmale des Synchronrings bilden können.

Beim vorgeschlagenen Synchronring sind höchstens 70%, vorzugsweise höchstens 60% der Konusfläche mit dem Reibbelag bedeckt. Ein solcher Synchronring lässt sich wegen des verminderten Materialeinsatzes für den Reibbelag kostengünstig herstellen. Der Reibbelag als solcher kann überdies verschnittfrei hergestellt werden. In Versuchen wurde ermittelt, dass sich die durch den wellen- oder trapezförmig ausgebildeten Reibbelagstreifen wesentlich verringerte Reibfläche nicht nennenswert negativ auf die Anwendbarkeit eines solchen Synchronrings auswirkt. Sowohl für das Reibungs- als auch das Verschleißverhalten konnten keine signifikanten Unterschiede festgestellt werden.

Nachfolgend werden Ausführungsbeispiele der Erfindung anhand der Zeichnungen näher erläutert. Es zeigen:

Fig. 1    ein Reibmaterial mit einem Schnittmuster nach dem Stand der Technik,

Fig. 2    ein Reibmaterial mit einem ersten erfindungsgemäßen Schnittmuster,

Fig. 3    ein Reibmaterial mit einem zweiten erfindungsgemäßen Schnittmuster,

Fig. 4    ein Reibmaterial mit einem dritten erfindungsgemäßen Schnittmuster,

Fig. 5    eine perspektivische Ansicht eines Synchronrings mit einem Reibbelag gemäß Fig. 2, und

Fig. 6    eine perspektivische Ansicht eines Synchronrings mit einem Reibbelag gemäß Fig. 3.

Fig. 1 zeigt ein flächenhaftes Reibmaterial 1 mit einem Schnittmuster zur Herstellung von streifenförmigen Reibbelägen 2 nach dem Stand der Technik. Bei dem flächenhaften Reibmaterial kann es sich z. B. um eine Karbonmatte, ein Aramidpapier oder andere zur Herstellung von Reibbelägen geeignete Materialien handeln.

Nach dem Stand der Technik ergibt sich die geometrische Form des streifenförmigen Reibbelags 2 durch Abwicklung einer Mantelfläche eines Kegelstumpfs. Beim Synchronring entspricht die Mantelfläche der Konusfläche.

Ein Kegelstumpf ist definiert durch einen ersten Radius r1 einer Grundfläche sowie einen kleineren zweiten Radius r2 einer parallelen Schnittfläche. Eine Höhe h des Kegelstumpfs geht vom Mittelpunkt der Grundfläche bis zum Mittelpunkt der Schnittfläche. Eine Länge der Mantellinie wird als M bezeichnet. Ein Winkel zwischen der Mantellinie M und einer Kegelachse wird als $\alpha$ (bzw. alpha) bezeichnet. Die abgewickelte Mantelfläche des Kegelstumpfs besitzt eine besondere Form. Man kann sie als Kreisringsektor beschreiben. Eine erste Breite B1 der abgewickelten Mantelfläche entspricht der Länge M der Mantellinie des Kegelstumpfs. Die Radien der langen Seiten des Kreisringsektors bzw. der Abwicklung geben sich wie folgt:

$$\text{großer Radius } R = r1 \,/\, \sin (alpha)$$

$$\text{kleiner Radius } r = R\text{-}M \quad \text{und zugleich} \quad r = r2 \,/\, \sin (alpha)$$

für die Bogenlänge des Kreissegments mit großem Radius R: r1*2*$\pi$

Der Winkel des Kreisringsektors ist 360° *(2 *$\pi$*r1) / (2*$\pi$*r1 / sin (alpha)). Damit ergibt sich ein Winkel des Kreisringsektors von sin($\alpha$) * 360°.

Wie aus Fig. 1 ersichtlich ist, ergibt die vorstehende Berechnung der Abwicklung für die einander gegenüberliegenden langen Seiten S1, S2 unterschiedliche Radien R, r. Infolgedessen ergibt sich zwischen zwei aufeinander folgenden Reibbelägen 2 ein Verschnitt 3 (siehe Fig. 1).

Selbst bei einer optimalen Anordnung nach dem Stand der Technik, bei welcher die Endpunkte der langen Seite S2 auf der langen Seite S1 der benachbarten Abwicklung liegen, bleibt immer noch ein sichelförmiger Verschnitt 3, der zudem prozesstechnisch erschwert zu entfernen ist.

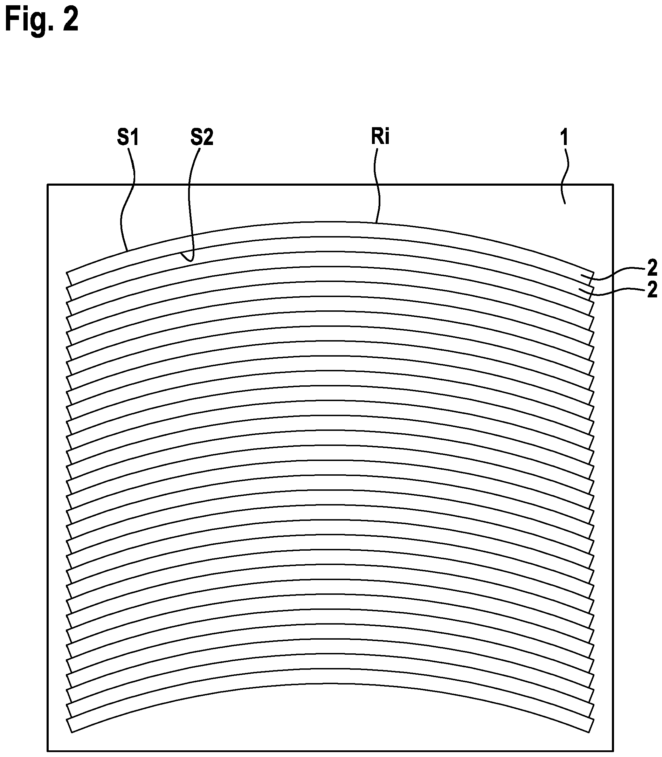

Fig. 2 zeigt eine erste Ausgestaltung eines Schnittmusters für Reibbeläge 2 nach dem Gegenstand der Erfindung. Die langen Seiten S1, S2 weisen hier einen identischen Radius Ri bzw. eine identische Geometrie auf. Infolgedessen können benachbarte Reibbeläge 2 durch eine einzige gemeinsame Schnittlinie voneinander getrennt werden. Zwischen den benachbarten Reibbelägen 2 verbleibt kein Verschnitt.

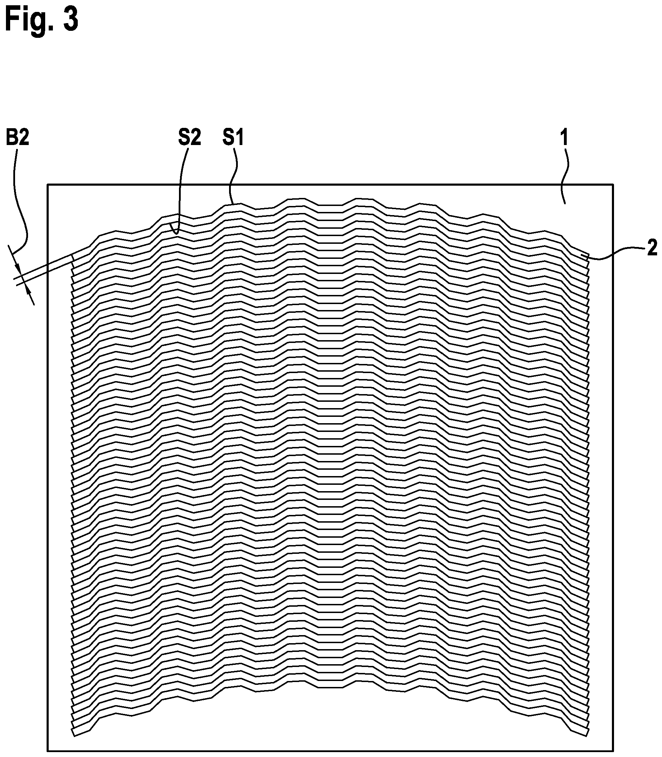

Fig. 3 zeigt ein zweites erfindungsgemäßes Schnittmuster. Die streifenförmigen Reibbeläge weisen hier eine trapezartige Form auf. Sie sind überdies gekrümmt. Ein Krümmungsradius ist bezüglich der Erhebungen der ersten langen Seite S1 und der Vertiefungen der zweiten langen Seite S2 identisch. D. h. die Erhebungen bzw. "Maxima" der ersten langen Seite S1 folgen einem Radius, welcher identisch ist mit einem Radius, welchem die Vertiefungen bzw. "Minima" der zweiten langen Seite S2 folgen. Die Reibbeläge 2 weisen eine zweite Breite B2 auf. Die zweite Breite B2 ist entlang der Längserstreckung des Reibbelags 2 nicht konstant. Sie ändert sich gegenüber einer mittleren zweiten Breite B2m um bis zu $\pm$ 30%.

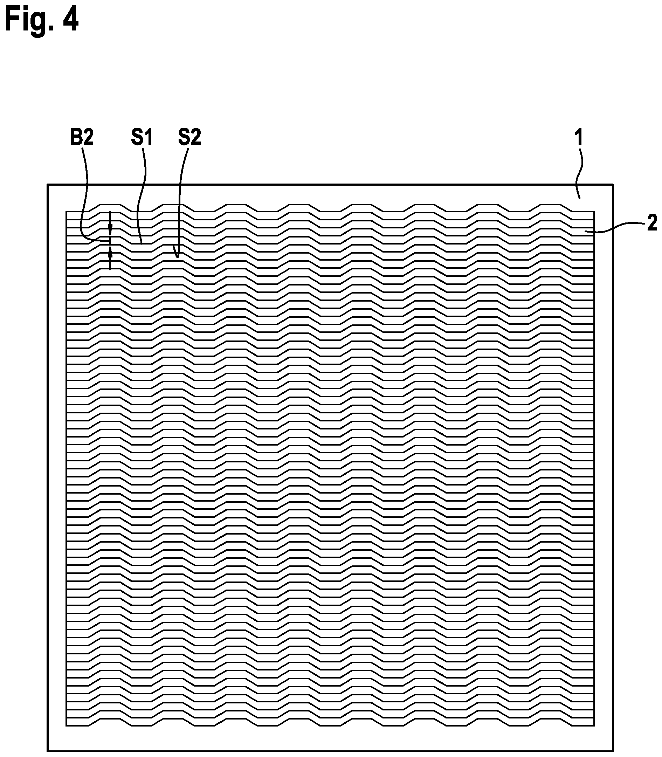

Fig. 4 zeigt ein drittes Ausführungsbeispiel der Erfindung. Die streifenförmigen Reibbeläge 2 sind auch hier trapezförmig ausgestaltet. Allerdings sind die Reibbeläge 2 hier nicht gekrümmt, sondern gerade ausgebildet. D. h. die "Maxima" bzw. die Strecken der erhobenen Trapezabschnitte der einen langen Seite sowie die "Minima" bzw. die Strecken der vertieften Trapezabschnitte der anderen langen Seite liegen jeweils auf einer Geraden.

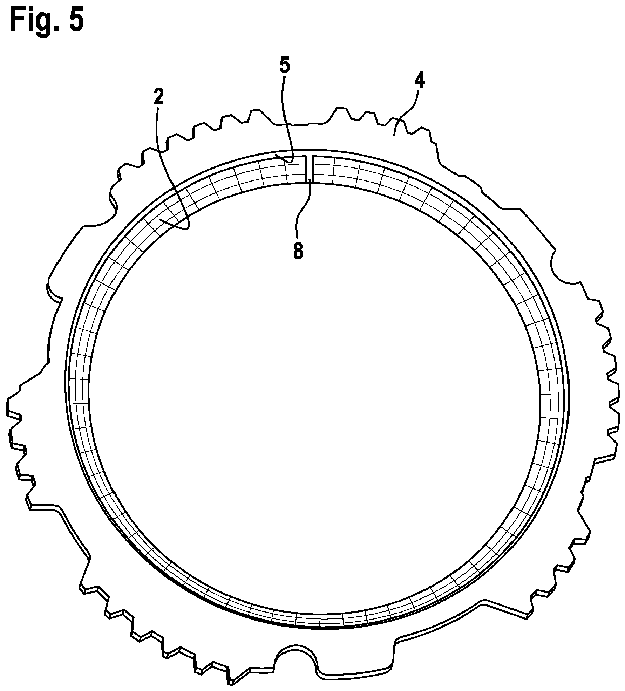

Fig. 5 zeigt eine perspektivische Ansicht eines Synchronrings 4, welcher auf seiner Innenseite eine Konusfläche 5 aufweist. Auf die Konusfläche 5 ist ein streifenförmiger Reibbelag gemäß Fig. 2 aufgeklebt. Da die geometrische Form des streifenförmigen Reibbelags 2 hier nicht exakt der Abwicklung der Konusfläche entspricht, ergibt sich ein schmaler, sichelförmiger unbeschichteter Bereich auf der Konusfläche. An der Nahtstelle / am Stoß (8) des Reibbelags tritt die größte Abweichung auf.

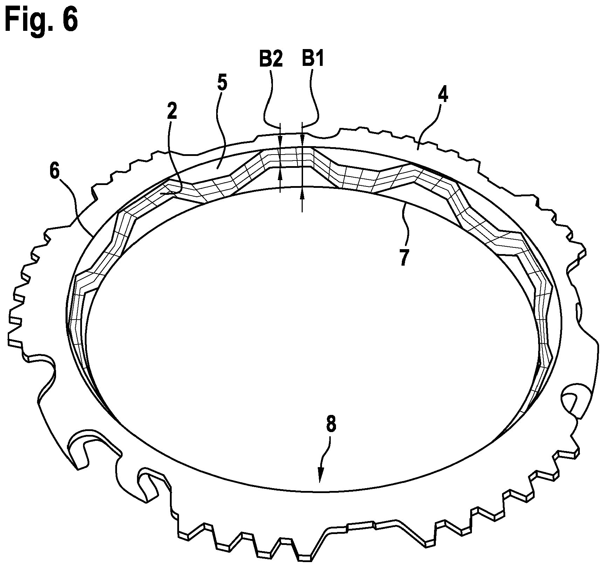

Fig. 6 zeigt eine weitere Ausgestaltung eines Synchronrings 4. Auf die Konusfläche 5 ist hier ein Trapez-streifenförmiger Reibbelag gemäß Fig. 3 aufgeklebt. Eine erste Breite B1 der Konusfläche 5 ist etwa doppelt so groß wie die zweite Breite B2 des Reibbelags 2. Der Reibbelag 2 erstreckt sich in Umfangsrichtung der konischen Reibfläche 5 trapezförmig. "Maxima" bzw. Erhebungen des Reibbelags 2 befinden sich in der Nähe einer oberen Kante 6 der Konusfläche 5. "Minima" bzw. Vertiefungen des Reibbelags 2 befinden sich entlang einer unteren Kante 7 der Konusfläche 5.

Zur Herstellung der in den Fig. 5 und 6 gezeigten Synchronringe werden aus einem flächenhaften Reibmaterial 1 eine Vielzahl von Reibbelägen 2 geschnitten oder gestanzt. Die Reibbeläge 2 werden sodann in herkömmlicher Art und Weise auf die Konusfläche 5 von Synchronringen 4 gefügt, beispielsweise geklebt.

Insbesondere die vorgeschlagene wellen- oder trapezförmige Ausgestaltung des Reibbelags ermöglicht eine erhebliche Einsparung an Reibmaterial 1.

Obwohl es in den vorstehenden Ausführungsbeispielen nicht gezeigt ist, kann statt der trapezförmigen Ausgestaltung des Reibbelags 2 auch eine wellenförmige Ausgestaltung verwendet werden. Auch eine zick-zack förmige oder mäanderförmige Ausgestaltung ist denkbar.

Bezugszeichenliste

| | |
|---|---|
| 1 | Reibmaterial |
| 2 | Reibbelag |
| 3 | Verschnitt |
| 4 | Synchronring |
| 5 | Konusfläche |
| 6 | obere Kante |
| 7 | untere Kante |
| 8 | Nahtstelle/Stoß |

| | |
|---|---|
| S1 | lange Seite |
| S2 | andere lange Seite |
| B1 | erste Breite |
| B2 | zweite Breite |
| R | großer Radius |
| r | kleiner Radius |
| Ri | identischer Radius |

**Patentansprüche**

1. Verfahren zur Herstellung eines Synchronrings oder einer konischen Reibkupplung (4) mit einem Reibbelag (2) mit folgenden Schritten:

   Bereitstellen eines Synchronrings oder Kupplungsbauteils (4) mit einer Konusfläche (5),
   Bereitstellen eines flächenhaften Reibmaterials (1),
   Schneiden des Reibmaterials (1), so dass ein streifenförmiger Reibbelag (2) mit zwei einander gegenüberliegenden langen Seiten (S1, S2) gebildet wird,
   Fügen des Reibbelags (2) auf die Konusfläche (5),
   **dadurch gekennzeichnet,**
   **dass** das Reibmaterial (1) so geschnitten wird, dass die beiden einander gegenüberliegenden langen Seiten (S1, S2) des Reibbelags (2) eine identische Geometrie aufweisen.

2. Verfahren nach Anspruch 1,
   wobei mehrere Reibbeläge (2) aus dem Reibmaterial (1) geschnitten werden, derart, dass die langen Seiten (S1, S2) benachbarter Reibbeläge (2) durch eine einzige Schnittlinie gebildet werden.

3. Verfahren nach einem der vorhergehenden Ansprüche,
   wobei die langen Seiten (S1, S2) des Reibbelags (2) einen identischen Radius aufweisen.

4. Verfahren nach einem der vorhergehenden Ansprüche,
   wobei die langen Seiten (S1, S2) des Reibbelags (2) wellen- oder trapezförmig ausgebildet sind.

5. Verfahren nach Anspruch 4,
   wobei Maxima und/oder Minima der wellen- oder trapezförmigen langen Seiten (S1, S2) auf identischen Radien liegen.

6. Verfahren nach Anspruch 4,
   wobei Maxima und/oder Minima der wellen- oder trapezförmigen langen Seiten (S1, S2) auf einer Geraden liegen.

7. Verfahren nach einem der vorhergehenden Ansprüche,
   wobei die Konusfläche (5) eine erste Breite B1 und der Reibbelag eine zweite Breite B2 aufweisen und für das Verhältnis zwischen erster B1 und zweiter Breite B2 gilt:

$$B1 = K * B2,$$

wobei $3 \geq K \geq 1,3$ ist..

8. Verfahren nach einem der vorhergehenden Ansprüche, wobei die zweite Breite B2 ein Mittelwert B2m ist, für den gilt:

$$0,7 * B2m \geq B2 \geq 1,3 * B2m,$$

vorzugsweise

$$0,8 * B2m \geq B2 \geq 1,2 * B2m,$$

vorzugsweise

$$0,9 * B2m \geq B2 \geq 1,1 * B2m.$$

9. Verfahren nach einem der Ansprüche 4 bis 8,
wobei der Reibbelag (2) entlang einer Umfangsrichtung der Konusfläche (5) so angebracht wird, dass Minima des Reibbelags (2) sich in der Nähe einer unteren Kante (7) der Konusfläche (5) und Maxima des Reibbelags sich in der Nähe einer oberen Kante (6) der Konusfläche (5) befinden.

10. Verfahren nach einem der vorhergehenden Ansprüche,
wobei der Reibbelag (2) vor oder beim Fügen so verformt wird, dass ein die langen Seiten (S1, S2) begrenzender Radius zumindest abschnittsweise geändert wird oder eine die langen Seiten (S1, S2) begrenzende Gerade zumindest abschnittsweise in einen Radius geändert wird.

11. Synchronring (4) oder Kupplungsbauteil mit einer Konusfläche (5) und einem auf die Konusfläche (5) gefügten Reibbelag (2),
wobei die Konusfläche (5) eine erste Breite B1 und der Reibbelag eine zweite Breite B2 aufweist,
**dadurch gekennzeichnet,**
**dass** für das Verhältnis zwischen erster B1 und zweiter Breite B2 gilt:

$$B1 = K * B2,$$

wobei $3 \geq K \geq 1,3$ ist.

12. Synchronring oder Kupplungsbauteil nach Anspruch 11, wobei für die zweite Breite B2 gilt:

$$0,7 * B2m \geq B2 \geq 1,3 * B2m,$$

vorzugsweise

$$0,8 * B2m \geq B2 \geq 1,2 * B2m,$$

vorzugsweise

$$0,9 * B2m \geq B2 \geq 1,1 * B2m.$$

**13.** Synchronring oder Kupplungsbauteil nach Anspruch 11 oder 12,
wobei höchstens 70%, vorzugsweise höchstens 60%, der Konusfläche (5) mit dem Reibbelag (2) bedeckt sind.

**14.** Synchronring oder Kupplungsbauteil nach einem der Ansprüche 11 bis 13, wobei der Reibbelag (2) sich entlang einer Umfangsrichtung der Konusfläche (5) wellen- oder trapezförmig erstreckt, so dass Minima des Reibbelags (2) sich in der Nähe einer unteren Kante (7) der Konusfläche (5) und Maxima des Reibbelags (2) sich in der Nähe einer oberen Kante (6) der Konusfläche (5) befinden.

# Fig. 1

**Stand der Technik**

# Fig. 2

# Fig. 3

# Fig. 4

# Fig. 5

# Fig. 6

**Europäisches Patentamt**
**European Patent Office**
**Office européen des brevets**

# EUROPÄISCHER RECHERCHENBERICHT

Nummer der Anmeldung

EP 21 18 2548

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2008/028656 A1 (DAIMLER CHRYSLER AG [DE]; EBERSPAECHER CHRISTOF [DE]) 13. März 2008 (2008-03-13) | 1-5,10 | INV. F16D23/02 F16D69/00 |
| A | * Seite 3, Zeile 17 - Seite 5, Zeile 13; Abbildungen 1-5 * ----- | 6-9, 11-14 | |
| A | EP 2 728 214 A1 (MIBA FRICTEC GMBH [AT]) 7. Mai 2014 (2014-05-07) * Spalte 3, Zeile 63 - Spalte 6, Zeile 53; Abbildungen 1-5 * ----- | 1-14 | |
| A | US 6 019 205 A (WILLWERTH JOHN [US] ET AL) 1. Februar 2000 (2000-02-01) * Absatz [0014] - Absatz [0042]; Abbildungen 1-5 * ----- | 1-14 | |

**RECHERCHIERTE SACHGEBIETE (IPC)**

F16D

Der vorliegende Recherchenbericht wurde für alle Patentansprüche erstellt

| Recherchenort | Abschlußdatum der Recherche | Prüfer |
|---|---|---|
| München | 4. November 2021 | Arboreanu, Antoniu |

KATEGORIE DER GENANNTEN DOKUMENTE

X : von besonderer Bedeutung allein betrachtet
Y : von besonderer Bedeutung in Verbindung mit einer
     anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
     nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
     Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 18 2548

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-11-2021

| Im Recherchenbericht angeführtes Patentdokument | Datum der Veröffentlichung | Mitglied(er) der Patentfamilie | Datum der Veröffentlichung |
|---|---|---|---|
| WO 2008028656 A1 | 13-03-2008 | DE 102006042442 A1<br>US 2009205922 A1<br>WO 2008028656 A1 | 27-03-2008<br>20-08-2009<br>13-03-2008 |
| EP 2728214 A1 | 07-05-2014 | AT 513584 A1<br>EP 2728214 A1<br>US 2014127469 A1 | 15-05-2014<br>07-05-2014<br>08-05-2014 |
| US 6019205 A | 01-02-2000 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0305581 B1